(19) Europäisches Patentamt
European Patent Office
Office européen des brevets

(11) Publication number: 0 142 327 B1

(12) **EUROPEAN PATENT SPECIFICATION**

(45) Date of publication of patent specification: **13.05.87**

(51) Int. Cl.$^4$: **C 09 J 3/14,** C 08 F 222/00

(21) Application number: **84307681.1**

(22) Date of filing: **07.11.84**

(54) **Instant adhesive composition.**

(30) Priority: **10.11.83 US 550411**

(43) Date of publication of application:
**22.05.85 Bulletin 85/21**

(45) Publication of the grant of the patent:
**13.05.87 Bulletin 87/20**

(84) Designated Contracting States:
**AT BE CH DE FR GB IT LI NL SE**

(56) References cited:
**No relevant documents have been disclosed**

(73) Proprietor: **LOCTITE CORPORATION**
**705 North Mountain Road**
**Newington, Connecticut 06111 (US)**

(72) Inventor: **Liu, Ju-Chao**
**144 Summit Street**
**Newington Connecticut 06111 (US)**

(74) Representative: **Marchant, James Ian et al**
**Elkington and Fife High Holborn House**
**52/54 High Holborn**
**London WC1V 6SH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 142 327 B1

**Description**

Background of the Invention

In DE—OS No. 2,816,836, dated October 26, 1978 there are described cyanoacrylate adhesive compositions which employ crown ethers as polymerization accelerators. Such compositions are useful for bonding acidic surfaces such as wood which inhibit cyanoacrylate polymerization.

Crown ethers, however, are known to be very toxic, the reported effects of exposure including damage to the central nervous system and testicular atrophy. Leong, B.K.J., Chem. Eng. News, *53*, 5 (1975). Furthermore, such accelerators are reportedly very difficult to synthesize, supplying the desired product in only low yields because of the tendency to produce intermolecular linkages. Accordingly, there is a need for alternative cyanoacrylate accelerators suitable for wood bonding applicators.

In U.S. Patent 4,170,585, there are described cyanoacrylate compositions in which certain polyethylene glycols or poly(ethyleneoxy) functional surfactants act as wood bonding accelerators. Such compounds, however, have the reported disadvantage that they tend to contain water and other difficult to remove substances which spontaneously initiate polymerization of the cyanoacrylate monomer.

U.S. Patent 4,377,490 discloses mixtures of aromatic and aliphatic polyols and polyethers said to improve initial strength of cyanoacrylate wood bonding products.

U.S. Patent 4,386,193 discloses certain 3 or 4 arm polyol podand compounds as alternatives to crown-ether accelerators.

Japanese published application 82—70171, suggests the use of certain polyorgano siloxane compounds which include polyether substituents as additives for wood bonding cyanoacrylate compositions.

Chem. Abstracts, *97* 145913n reports the use of a hydroxy-terminated poly(dimethylsiloxane) in fast bonding cyanoacrylate compositions.

DE—OS 3,006,071 discloses certain furan derivatives as co-accelerators with crown ethers in cyanoacrylate compositions.

Summary of the Invention

The present invention is a new cyanoacrylate composition for bonding wood and other de-activating surfaces such as leather, ceramic, plastics and metals with chromate treated or acidic oxide surfaces. The inventive compositions are standard cyanoacrylate adhesive formulations to which have been added accelerator compounds known as silacrowns. The silacrown compounds are preferably employed at levels between about 0.1% and 5% by weight of the composition.

The silacrown accelerators have significantly lower reported acute toxicity than the crown ether compounds of the prior art. Silacrown compounds are commercially available and are reportedly readily synthesized in good yield.

Detailed Description of the Invention

The α-cyanoacrylate-type adhesive composition of this invention as described above contains an α-cyanoacrylate monomer of the formula:

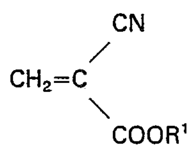

wherein $R^1$ represents a straight chain or branched chain alkyl group having 1 to 12 carbon atoms (which may be substituted with a substituent such as a halogen atom or an alkoxy group), a straight chain or branched chain alkenyl group having 2 to 12 carbon atoms, a straight chain or branched chain alkynyl group having 2 to 12 carbon atoms, a cycloalkyl group, an aralykyl group or an aryl group. Specific examples of the groups for $R^1$ are a methyl group, an ethyl group, an n-propyl group, an isopropyl group, an n-butyl group, an isobutyl group, a pentyl group, a hexyl group, an allyl group, a methallyl group, a crotyl group, a propargyl group, a cyclohexyl group, a benzyl group, a phenyl group, a cresyl group, a 2-chloroethyl group, a 3-chloropropyl group, a 2-chlorobutyl group, a trifluoroethyl group, a 2-methoxyethyl group, a 3-methoxybutyl group and a 2-ethoxyethyl group.

A single α-cyanoacrylate monomer or a mixture of two or more of these α-cyanoacrylate monomers can be used. Generally, the above α-cyanoacrylate monomer alone is not sufficient as an adhesive, and the components set forth below are sometimes added:

(1) An anionic polymerization inhibitor
(2) A radical polymerization inhibitor
(3) A thickener
(4) Special additives such as plasticizers and heat stabilizers
(5) Perfumes, dyes, pigments, etc.

A suitable amount of the α-cyanoacrylate monomer present in the adhesive composition is about 80 to

99.9% by weight preferably 90 to 99.9% by weight, based on the total weight of the adhesive composition.

An anionic polymerization inhibitor is added to the α-cyanoacrylate-type adhesive composition, e.g., in an amount of about 1 to 1000 ppm based on the total weight of the adhesive composition, to increase the stability of the adhesive composition during storage, and examples of known inhibitors are sulfur dioxide, aromatic sulfonic acids, aliphatic sulfonic acids, sultones, and carbon dioxide.

Suitable examples of radical polymerization inhibitors include, for example, hydroquinone and hydroquinone monomethyl ether. A radical polymerization inhibitor is added, e.g., in amount of about 1 to 5000 ppm based on the total weight of the adhesive composition, for the purpose of capturing radicals which are formed by light during storage.

A thickener is added to increase the viscosity of α-cyanoacrylate-type adhesive composition. The α-cyanoacrylate monomer generally has a low viscosity of about several millipascals/sec, and therefore, the adhesive penetrates into porous materials such as wood and leather or adherents having a rough surface. Thus, good adhesion strengths are difficult to obtain. Various polymers can be used as thickeners, and examples include poly(methyl methacrylate), methacrylate-type copolymers, acrylic rubbers, cellulose derivatives, polyvinyl acetate and poly(α-cyanoacrylate). A suitable amount of thickener is generally about 20% by weight or less based on the total weight of the adhesive composition.

Certain fumed silica fillers treated with polydialkylsiloxanes or trialkoxyalkylsilanes may also be usefully employed as cyanoacryalte thickeners.

The plasticizers, perfumes, dyes, pigments, etc., may be added depending on use purposes in amounts which do not adversely affect the stability of the α-cyanoacrylate monomer. The use of such additives is within the skill of those practicing in the cyanoacrylate adhesive art and need not be detailed herein.

The silacrown accelerators useful in the inventive compositions have been reported by Arkles, et al., Organometalics, *2* 454—457 (1983) and in "Chemically Modified Surfaces in Catalysis and Electrocatalysis," ACS Symposium Serial 192, J. Miller, ed., pp. 281—292, ACS (1982). They may be represented by the following general structure:

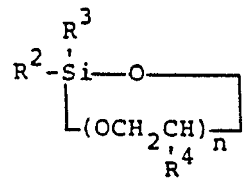

where $R^2$ and $R^3$ are organo groups which do not themselves cause polymerization of the cyanoacrylate monomer, $R^4$ is H or $CH_3$ and n is an integer. Examples of suitable $R^2$ and $R^3$ groups are $R^1$ groups, alkoxy groups such as methoxy, and aryloxy groups such as phenoxy. The $R^2$ and $R^3$ groups may contain halogen or other substituents, an example being trifluoropropyl. Groups not suitable as $R^2$ and $R^3$ groups are basic groups such as amino, substituted amino and alkylamino.

Specific examples of silacrown compounds useful in the inventive compositions include dimethylsila-11-crown-4(I); dimethylsila-14-crown-5(II); and dimethylsila-17-crown-6(III).

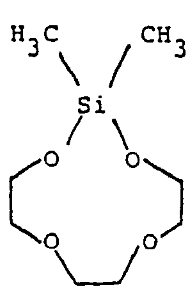

I

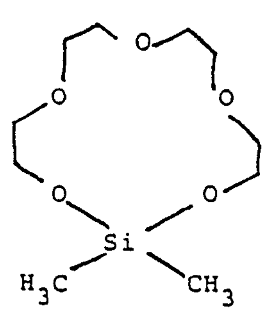

II

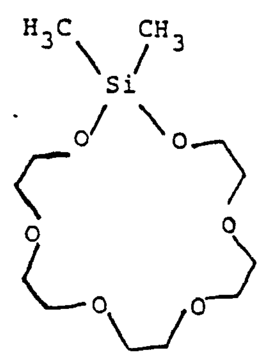

III

The name indicates the substituents on the silicon atom, the number of members in the ring and the number of oxygens.

As reported in the aforementioned Arkles et al. papers, the silicrowns may be readily prepared by transesterification of alkoxysilanes with polyethylene glycols. Certain of the compounds are also sold by Petrarch Systems Research Laboratories, Bristol, PA.

The following examples serve to illustrate the invention.

Examples 1—5

Cyanoacrylate compositions were prepared containing 6% poly(methyl methacrylate) thickener, a silacrown compound as indicated in Table I, and the balance ethyl cyanoacrylate stabilized with 1000 ppm hydroquinone, 10 ppm methane sulfonic acid and 10 ppm $SO_2$. The compositions were applied between balsa wood strips and fixture time, measured as time required for the composition to gel sufficiently to cause the two unloaded substrates to move as a unit when rotary pressure is applied to one of the substrates, was determined for each composition. The results given in Table I demonstrate the significantly reduced fixture time for the inventive compositions of Example 1—4 over that of a blank, Example 5.

TABLE I

| Example | Additive | % Concentration | Fixture Time (sec) |
|---|---|---|---|
| 1 | dimethylsila-14-crown-5 | 0.5 | 12 |
| 2 | dimethylsila-11-crown-4 | 0.5 | 12 |
| 3 | dimethylsila-17-crown-6 | 0.5 | 6 |
| 4 | dimethylsila-17-crown-6 | 1.0 | 3 |
| 5 | none | — | 45 |

Example 6

The composition of Example 4 was applied between Balsa, Birch and Oak strips. Cure times, determined as time required to give a substrate failure in order to break the bond, were compared to that of the silacrown free composition of Example 5. Results are given in Table II.

TABLE II

| Wood Type | Cure Time (sec) % dimethylsila-17-crown-6 | no additive |
|---|---|---|
| Balsa | 15 | 90 |
| Birch | 30 | 360 |
| Oak | 300 | 3600 |

The sensitivity of cyanoacrylate monomers creates particular problems in the selection of property modifying additives which will not reduce storage stability of the composition to unacceptable levels. The inventive compositions show some minor reduction in shelf life compared to silacrown free compositions, but display storage stability which is satisfactory for the general commercial purposes to which cyanoacrylate adhesives are used. Example 7 demonstrates that the use of silacrown accelerators does not produce an unsatisfactorily reduction in shelf life.

Example 7

Samples of the inventive composition of Example 4 and the control composition of Example 5, in closed Pyrex® containers, were placed in a 55°C oven until gellation was observed. The control sample lasted 55 days and the inventive composition lasted 50 days.

The reduced observed toxicity of silacrowns in comparison to crown-ethers may be related to the hydrolytic instability of the Si—O—C linkage. Thus, while the silacrown ring is stable in the cyanoacrylate composition, it will open up in biological environments, reducing both acute and chronic risk.

**Claims**

1. A cyanoacrylate adhesive composition, characterized in that said adhesive composition includes a silacrown compound additive.

2. The composition of claim 1, characterized in that said cyanoacrylate adhesive composition contains a monomer of the formula:

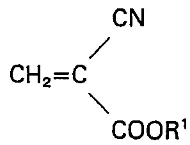

3. The composition of Claim 2, characterized in that $R^1$ is selected from a methyl group, an ethyl group, an n-propyl group, an isopropyl group, an n-butyl group, an isobutyl group, a pentyl group, a hexyl group, an allyl group, a methallyl group, a crotyl group, a propargyl group, a cyclohexyl group, a benzyl group, a phenyl group, a cresyl group, a 2-chloroethyl group, a 3-chloropropyl group, a 2-chlorobutyl group, a trifluoroethyl group, a 2-methoxyethyl group, a 3-methoxybutyl group and a 2-ethoxyethyl group.

4. The composition of claim 2, characterized in that said silacrown compound is represented by the formula:

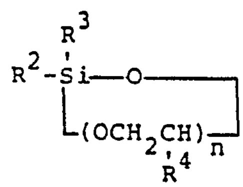

wherein $R^2$ and $R^3$ are organo groups which do not cause polymerization of the cyanoacrylate monomer, $R^4$ is H or $CH_3$ and n is an integer.

5. The composition of claim 4, characterized in that $R^2$ and $R^3$ are selected from $R^1$, alkoxy and aryloxy groups.

6. The composition of claim 5, characterized in that said silacrown additive is selected from dimethyl-11-crown-4; dimethyl-14-crown-5; and dimethylsila-17-crown-6.

7. The composition of any of claims 1 to 6, characterized in that said silacrown compound is present in the range of 0.1—5% by weight.

8. The composition of any of claims 1 to 7, characterized by additionally comprising an anionic polymerization inhibitor and a free radical polymerization inhibitor, and/or a thickener.

9. A method of bonding substrates together wherein a cyanoacrylate adhesive composition is applied to at least one of said substrates and the substrates joined for sufficient time to permit the adhesive to fixture, characterized in that said adhesive composition includes a silacrown compound additive.

10. The method of Claim 9, characterized in that at least one of said substrates is selected from wood, leather, ceramic, plastic and metals with chromate-treated or acidic oxide surfaces.

**Patentansprüche**

1. Cyanoacrylat-Klebemittelzusammensetzung, dadurch gekennzeichnet, dass die Klebemittelzusammensetzung eine Silakronenverbindung als Additiv einschliesst.

2. Zusammensetzung nach Anspruch 1, dadurch gekennzeichnet, dass die Cyanoacrylat-Klebemittelzusammensetzung ein Monomer der Formel enthält:

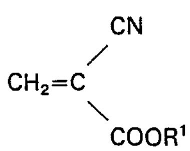

3. Zusammensetzung nach Anspruch 2, dadurch gekennzeichnet, dass $R^1$ ausgewählt wird aus einer Methylgruppe, Ethylgruppe, n-Propylgruppe, Isopropylgruppe, n-Butylgruppe, Isobutylgruppe, Pentylgruppe, Hexylgruppe, Allylgruppe, Methallylgruppe, Crotylgruppe, Propargylgruppe, Cyclohexylgruppe, Benzylgruppe, Phenylgruppe, Cresylgruppe, 2-Chlorethylgruppe, 3-Chlorpropylgruppe, 2-Chlorbutylgruppe, Trifluorethylgruppe, 2-Methoxyethylgruppe, 3-Methoxybutylgruppe und 2-Ethoxyethylgruppe.

4. Zusammensetzung nach Anspruch 2, dadurch gekennzeichnet, dass die Silakronen-Verbindung durch die Formel wiedergegeben wird:

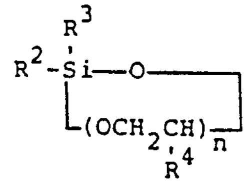

worin $R^2$ und $R^3$ Organogruppen sind, welche eine Polymerisation des Cyanoacrylat-Monomeren nicht bewirken, $R^4$ H oder $CH_3$ ist und n eine ganze Zahl ist.

5. Zusammensetzung nach Anspruch 4, dadurch gekennzeichnet, dass $R^2$ und $R^3$ ausgewählt werden aus $R^1$, Alkoxy- und Aryloxygruppen.

6. Zusammensetzung nach Anspruch 5, dadurch gekennzeichnet, dass das Silakronen-Additiv ausgewählt wird aus Dimethyl-11-krone-4; Dimethyl-14-krone-5 und Dimethylsila-17-krone-6.

7. Zusammensetzung nach einem der Ansprüche 1 bis 6, dadurch gekennzeichnet, dass die Silakronenverbindung in einem Bereich von 0,1 bis 5 Gew.-% vorhanden ist.

8. Zusammensetzung nach einem der Ansprüche 1 bis 7, gekennzeichnet durch einen zusätzlichen Gehalt an einem anionischen Polymerisationsinhibitor und einem Freie-Radikale-Polymerisationsinhibitor und/oder einem Verdickungsmittel.

9. Verfahren zum Verkleben von Substraten, worin eine Cyanoacrylat-Klebemittelzusammensetzung auf wenigstens eines dieser Substrate angewandt wird und die Substrate über einen hinreichenden Zeitraum zusammengeführt werden, um das Klebemittel festigen zu lassen, dadurch gekennzeichnet, dass die Klebemittelzusammensetzung eine Silakronenverbindung einschliesst.

10. Verfahren nach Anspruch 9, dadurch gekennzeichnet, dass wenigstens eines dieser Substrate ausgewählt wird aus Holz, Leder, Keramik, Plastik und Metallen mit Chromat-behandelten oder aziden Oxidoberflächen.

**Revendications**

1. Composition adhésive cyanoacrylique caractérisée en ce que ladite composition adhésive comprend un additif composé à base d'un dérivé de silicium en forme de couronne.

2. Composition selon la revendication 1, caractérisée en ce que ladite composition adhésive organoacrylique contient un monomère de formule:

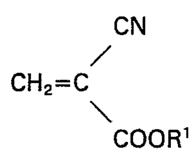

3. Composition selon la revendication 2, caractérisée en ce que le radical $R^1$ est choisi dans un groupe méthyle, un groupe éthyle, un groupe n-propyle, un groupe isopropyle, un groupe n-butyle, un groupe isobutyle, un groupe pentyle, un groupe hexyle, un groupe allyle, un groupe méthallyle, un groupe crotyle, un groupe propargyle, un groupe cyclohexyle, un groupe benzyle, un groupe phényle, un groupe crésyle, un groupe 2-chloroéthyle, un groupe 3-chloropropyle, un groupe 2-chlorobutyle, un groupe trifluoroéthyle, un groupe 2-méthoxyéthyle, un groupe 3-méthoxybutyle et un groupe 2-ethoxyéthyle.

4. Composition selon la revendication 2, caractérisée en ce que ledit composé à base de dérivé de silicium en forme de couronne est représenté par la formule:

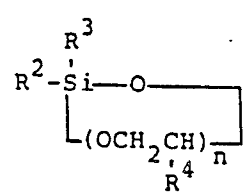

où $R^2$ et $R^3$ sont des groupes organiques qui ne provoquent pas de polymérisation du monomère cyanoacrylique, $R^4$ est H ou $CH_3$ et n est un nombre entier.

5. Composition selon la revendication 4, caractérisée en ce que $R^2$ et $R^3$ sont choisis parmi les groupes alcoyle et aroyloxy de $R^1$.

6. Composition selon la revendication 5, caractérisée en ce que ledit additif composé à base d'un dérivé de silicium en forme de couronne est choisi parmi le diméthyle-11-"crown"-4, le diméthyle-14-"crown"-5, et le diméthyle"sila"-17-"crown"-6.

7. Composition selon l'une quelconque des revendications 1 à 6, caractérisée en ce que ledit composé à base d'un dérivé de silicium en forme de courone est présent à raison de 0,1 à 5% du poids.

8. Composition selon l'une quelconque des revendications 1 à 7, caractérisée en ce qu'elle comporte en outre un inhibiteur de polymérisation anionique et un inhibiteur de polymérisation à radical libre, et/ou un épaississant.

9. Procédé de liaison de substrats où une composition adhésive cyanoacrylique est utilisée comme étant l'un des substrats et les substrats unis pendant un temps suffisant pour permettre à l'adhésif de prendre, caractérisé en ce que ladite composition adhésive comporte un additif composé à base d'un dérivé de silicium en forme de couronne.

10. Procédé selon la revendication 9, caractérisé en ce qu'au moins un desdits substrats est du bois, du cuir, de la céramique, de la matière synthétique et des métaux ayant des surfaces chromées ou oxydées à l'acide.